# EUROPÄISCHE PATENTANMELDUNG

(11) **EP 1 515 062 A1**
(43) Veröffentlichungstag der Anmeldung: **16.03.2005**
(21) Anmeldenummer: 04020587.4
(22) Anmeldetag: 31.08.2004
(51) Int. Cl.: F16D 65/12, F16D 65/847

(54) **Innenbelüftete Bremsscheiben mit verbesserter Kühlung**

(30) Priorität: 09.09.2003 DE 10341464
(71) Anmelder: SGL CARBON AG, 65203 Wiesbaden (DE)
(72) Erfinder: Winkelmann, Peter, 86672 Thierhaupten (DE); Zapf, Florian, 86368 Gersthofen (DE)
(74) Vertreter: Deckers, Hellmuth, A., Dr.

(57) **Zusammenfassung**

Innenbelüftete Bremsscheibe in Form einer Kreisringscheibe mit Kühlkanälen im Inneren der Scheibe, die sich jeweils vom inneren Umfang zum äußeren Umfang der Kreisringscheibe erstrecken, wobei der Kanalquerschnitt und der Kanalverlauf - Krümmungsradius, Winkel - innerhalb der Bremsscheibe sowie die Verzweigungen der Kanäle so gestaltet sind, daß die Kühlwirkung durch die Luftströmung möglichst effizient wird

## Beschreibung

Die Erfindung betrifft innenbelüftete Bremsscheiben mit verbesserter Kühlung.

Beim Abbremsen von Fahrzeugen wird kinetische Energie über das Bremssystem im Wärme umgewandelt, dabei verringert sich die Geschwindigkeit des Fahrzeugs.

Die entstehende Wärme sollte vom Ort der Entstehung möglichst effizient abgeführt werden, da eine Temperaturerhöhung des heute meist aus Bremsscheibe und Bremszange mit Belägen bestehenden Bremssystems in den meisten Fällen zu einer Verschlechterung des Reibwerts führt.

Bei Fahrzeugen, bei denen hohe kinetische Energien beim Bremsen in Wärme umgewandelt werden müssen, werden Bremsscheiben mit Innenbelüftung durch Kanäle im Inneren der Scheibe eingesetzt. Solche innenbelüfteten Bremsscheiben sind beispielsweise aus der deutschen Offenlegungsschrift DE-A 22 57 176 bekannt. Trotz dieser Maßnahme beobachtet man weiterhin eine erhebliche Erwärmung und eine damit verbundene Verschlechterung des Reibungskoeffizienten.

Es besteht daher die Aufgabe, die Wirksamkeit der Kühlung durch derartige Kanäle im Inneren der Bremsscheiben zu verbessern.

Die Aufgabe wird gelöst durch Optimierung der Geometrie der Kanäle, wobei der Kanalquerschnitt und der Kanalverlauf innerhalb der Bremsscheibe so gestaltet werden, daß die Kühlwirkung durch die Luftströmung möglichst effizient wird.

Die Erfindung betrifft daher eine innenbelüftete Bremsscheibe in Form einer Kreisringscheibe mit Kühlkanälen im Inneren der Scheibe, die sich jeweils vom inneren Umfang zum äußeren Umfang der Kreisringscheibe erstrecken, wobei sich die Gesamtfläche Fa der senkrecht zu der Mittelinie der Kanäle gemessenen Querschnitte der am äußeren Umfang gelegenen Öffnungen der Kanäle zur Gesamtfläche Fi der senkrecht zu der Mittelinie der Kanäle gemessenen Querschnitte der am inneren Umfang gelegenen Öffnungen der Kanäle verhält wie Fa/Fi = 0,1 bis 1,07, bevorzugt 0,3 bis 1,03, und besonders bevorzugt 0,5 bis 1,01. Es ist dabei insbesondere bevorzugt, daß das Verhältnis Fa/Fi weniger als 1,0 beträgt.

Die Erfindung betrifft weiter eine innenbelüftete Bremsscheibe in Form einer Kreisringscheibe mit Kühlkanälen im Inneren der Scheibe, die sich jeweils vom inneren Umfang zum äußeren Umfang der Kreisringscheibe erstrecken, wobei die Projektionen der Mittelinien der Kanäle auf die Ebene der Kreisringscheibe gekrümmt sind, und deren Krümmungsradius mindestens 53 %, bevorzugt mindestens 55 %, und besonders bevorzugt mindestens 60 % des Außenradius der Kreisringscheibe beträgt. In einer weiteren bevorzugten Ausführungsform nimmt der Krümmungsradius der Projektionen der Mittelinien der Kanäle auf die Ebene der Kreisringscheibe von innen nach außen zu, wobei der Krümmungsradius am inneren Ende der Kanäle bis zu 45 % des Außenradius der Kreisringscheibe, bevorzugt bis zu 50 %, und besonders bevorzugt bis zu 55 % des Außenradius der Kreisringscheibe beträgt.

Die Erfindung betrifft ebenfalls eine innenbelüftete Bremsscheibe in Form einer Kreisringscheibe mit Kühlkanälen im Inneren der Scheibe, die sich jeweils vom inneren Umfang zum äußeren Umfang der Kreisringscheibe erstrecken, wobei die Projektionen der Mittelinien der Kanäle auf die Ebene der Kreisringscheibe am inneren Umfang des Kreisrings in einem Winkel von bis zu 25° zur radialen Richtung stehen. Bevorzugt beträgt dieser Winkel bis zu 23°, und besonders bevorzugt bis zu 20°.

Die Erfindung betrifft weiter eine innenbelüftete Bremsscheibe in Form einer Kreisringscheibe mit Kühlkanälen im Inneren der Scheibe, die sich jeweils vom inneren Umfang zum äußeren Umfang des Kreisrings erstrecken, wobei die Kühlkanäle von innen nach außen hin verzweigt sind, derart daß eine Kanalöffnung am inneren Umfang mit mindestens zwei Kanalöffnungen am äußeren Umfang verbunden ist, und daß eine Kanalöffnung am äußeren Umfang mit höchstens einer Kanalöffnung am inneren Umfang verbunden ist. Dabei verhält sich die Anzahl Na der am äußeren Umfang gelegenen Öffnungen der Kanäle zur Anzahl Ni der am inneren Umfang gelegenen Öffnungen der Kanäle wie Na : Ni = 2:1 bis 5:1, bevorzugt mindestens 2,5 zu 1, und insbesondere mindestens wie 3 zu 1. Hierbei ist es bevorzugt, daß der mittlere Abstand der Verzweigungsstellen von der Drehachse der Kreisringscheibe im Intervall von ri + (ra - ri) * x liegt, wobei für die untere und die oberen Grenze des Intervalls x jeweils Werte zwischen 0,2 und 0,8 annimmt, wobei selbstverständlich der Wert für die obere Grenze immer größer als der für die untere Grenze ist. Die Grenzen des Intervalls sind dann limitiert durch den tiefsten Wert für die Untergrenze, ri + (ra - ri) * 0,2 und den höchsten Wert für die Obergrenze, ri + (ra - ri) * 0,8. Dabei bedeuten ri den Innenradius und ra den Außenradius der Kreisringscheibe. Ist Na/Ni größer als 2, so ist es bevorzugt, daß die Verzweigungsstellen in zwei nicht überlappenden Intervallen ri + (ra - ri) * x liegen, wobei x für das erste Intervall Werte von x1 = 0,1 bis 0,5 und für das zweite Intervall x2 = 0,3 bis 0,8 annimmt, wobei die Differenz des niedrigsten Werts von x2 und des höchsten Werts von x1 mindestens 0,05, bevorzugt 0,1 beträgt. Die Werte für die Obergrenze des ersten und für die Untergrenze des zweiten Intervalls sind daher so zu wählen, daß die genannten Differenz stets eingehalten wird. Wählt man also beispielsweise als Grenzen für das erste Intervall x1 = 0,1 bis 0,5, so ergibt sich für x2 = 0,55 bis 0,8; oder wählt man die Grenzen für das zweite Intervall x2 = 0,4 bis 0,8, so kann der höchste Wert von x1 maximal 0,35 betragen.

Es ist im Rahmen der Erfindung selbstverständlich möglich, die genannten Maßnahmen zu kombinieren. Durch Kombination von zwei oder mehr als zwei dieser Maßnahmen wird die Effizienz der Kühlung weiter erhöht.

Besonders vorteilhaft hat sich erwiesen, die genannten Maßnahmen bei Bremsscheiben aus faserverstärkten Keramik-Werkstoffen anzuwenden, insbesondere solchen Werkstoffen, bei denen die Verstärkungsfasern aus Kohlenstoff sind, und insbesondere bei solchen faserverstärkten keramischen Werkstoffen, deren Matrix Phasen aus Siliciumcarbid enthält. Besonders bevorzugt sind daher innenbelüftete Bremsscheiben in Form von Kreisringscheiben mit innenliegenden Kühlkanälen, die aus einem mit Kohlenstoffasern verstärkten keramischen Werkstoff bestehen, der Siliciumcarbid in der Matrix enthält, wobei die Kühlkanäle mindestens eines der erfindungsgemäßen Merkmale aufweisen.

In den Ausführungsformen gemäß der Erfindung ergibt sich durch die verbesserte Strömung in den Kanälen eine deutliche Absenkung der Betriebstemperatur der Bremsscheibe bei Dauerbremsung und eine rascheres Absinken der Temperatur der rotierenden Bremsscheibe nach einer Bremsung.

## Patentansprüche

1. Innenbelüftete Bremsscheibe in Form einer Kreisringscheibe mit Kühlkanälen im Inneren der Scheibe, die sich jeweils vom inneren Umfang zum äußeren Umfang der Kreisringscheibe erstrecken, **dadurch gekennzeichnet, daß** sich die Gesamtfläche Fa der senkrecht zu der Mittelinie der Kanäle gemessenen Querschnitte der am äußeren Umfang gelegenen Öffnungen der Kanäle zur Gesamtfläche Fi der senkrecht zu der Mittelinie der Kanäle gemessenen Querschnitte der am inneren Umfang gelegenen Öffnungen der Kanäle verhält wie Fa/Fi = 0,1 bis 1,07.

2. Innenbelüftete Bremsscheibe in Form einer Kreisringscheibe mit Kühlkanälen im Inneren der Scheibe, die sich jeweils vom inneren Umfang zum äußeren Umfang der Kreisringscheibe erstrecken, **dadurch gekennzeichnet, daß** die Projektionen der Mittelinien der Kanäle auf die Ebene der Kreisringscheibe gekrümmt sind, und deren Krümmungsradius mindestens 53 % des Außenradius der Kreisringscheibe beträgt.

3. Innenbelüftete Bremsscheibe nach Anspruch 2, **dadurch gekennzeichnet, daß** der Krümmungsradius der Projektionen der Mittelinien der Kanäle auf die Ebene der Kreisringscheibe von innen nach außen zunimmt, wobei der Krümmungsradius am inneren Ende der Kanäle bis zu 45 % des Außenradius der Kreisringscheibe beträgt.

4. Innenbelüftete Bremsscheibe in Form einer Kreisringscheibe mit Kühlkanälen im Inneren der Scheibe, die sich jeweils vom inneren Umfang zum äußeren Umfang der Kreisringscheibe erstrecken, **dadurch gekennzeichnet, daß** die Projektionen der Mittelinien der Kanäle auf die Ebene der Kreisringscheibe am inneren Umfang der Kreisringscheibe in einem Winkel von bis zu 25° zur radialen Richtung stehen.

5. Innenbelüftete Bremsscheibe in Form einer Kreisringscheibe mit Kühlkanälen im Inneren der Scheibe, die sich jeweils vom inneren Umfang zum äußeren Umfang der Kreisringscheibe erstrecken, **dadurch gekennzeichnet, daß** die Kühlkanäle von innen nach außen hin verzweigt sind, derart daß eine Kanalöffnung am inneren Umfang mit mindestens zwei Kanalöffnungen am äußeren Umfang verbunden ist, und daß eine Kanalöffnung am äußeren Umfang mit höchstens einer Kanalöffnung am inneren Umfang verbunden ist, wobei sich die Anzahl Na der am äußeren Umfang gelegenen Öffnungen der Kanäle zur Anzahl Ni der am inneren Umfang gelegenen Öffnungen der Kanäle verhält wie Na : Ni = 2:1 bis 5:1.

6. Innenbelüftete Bremsscheibe nach Anspruch 5, **dadurch gekennzeichnet, daß** der mittlere Abstand der Verzweigungsstellen von der Drehachse der Kreisringscheibe im Intervall von ri + (ra - ri) * x liegt, wobei x Werte zwischen 0,2 und 0,8 annimmt.

7. Innenbelüftete Bremsscheibe nach Anspruch 5, **dadurch gekennzeichnet, daß** die Anzahl der Verzweigungsstellen 2 oder größer als 2 ist, und daß die Verzweigungsstellen in zwei nicht überlappenden Intervallen ri + (ra - ri) * x liegen, wobei x für das erste Intervall Werte von x1 = 0,1 bis 0,5 und für das zweite Intervall x2 = 0,3 bis 0,8 annimmt, wobei die Differenz von x2 und x1 mindestens 0,05, bevorzugt 0,1 beträgt.

8. Innenbelüftete Bremsscheibe nach zwei oder mehreren der Ansprüche 1, 2 und 4 bis 6.

9. Innenbelüftete Bremsscheibe nach zwei oder mehreren der Ansprüche 1, 2, 4, 5 und 7.

10. Innenbelüftete Bremsscheibe nach zwei oder mehreren der Ansprüche 1 und 3 bis 6.

11. Innenbelüftete Bremsscheibe nach zwei oder mehreren der Ansprüche 1 und 3 bis 5 und 7.
